# EUROPÄISCHE PATENTANMELDUNG

(11) **EP 1 329 608 A2**
(43) Veröffentlichungstag der Anmeldung: **23.07.2003**
(21) Anmeldenummer: 03001420.3
(22) Anmeldetag: 22.01.2003
(51) Int. Cl.: F01N 7/18, F01N 7/08, F16L 27/10, F16L 27/103, F16L 27/06

(54) **Abgasanlage für Kraftfahrzeuge**

(30) Priorität: 22.01.2002 DE 10202158; 12.03.2002 DE 10210871
(71) Anmelder: Faurecia Abgastechnik GmbH, 90765 Fürth (DE)
(72) Erfinder: Schumacher, Herbert, 73669 Thomashardt (DE)
(74) Vertreter: Mörtel & Höfner

(57) **Zusammenfassung**

Die Erfindung betrifft eine Abgasanlage, mit zwei sich überlappenden Abgasrohren (1,2), zwischen denen ein ringförmiges, in Radialrichtung elastisch verformbares Dichtelement (6) angeordnet ist und der Überlappungsbereich (3,4) durch eine Rohrschelle (7) unter Kompression des Dichtelements (6) zusammengehalten ist. Der Überlappungsbereich (4) des zweiten Abgasrohres (2) weist eine ringförmig geschlossene, sich radial nach außen vorwölbende Wulst (17) auf, in der das Dichtelement (6) einliegt.

Die Abgasanlage ist gekennzeichnet dadurch, dass der von der Wulst (17) umfasste Oberflächenbereich des Dichtelements (6) eine der Wulstinnenfläche (18) entsprechende Krümmung (31) aufweist und dass die Wulstinnenfläche (18) und der Oberflächenbereich (19) des Dichtelements (6) Teile konzentrischer Kugelflächen sind, deren gemeinsamer Mittelpunkt (104) auf der Mittellängsachse (23,24) des Abgasrohres (1,2) liegt.

## Beschreibung

Die Erfindung betrifft eine Abgasanlage für Kraftfahrzeuge. Eine Abgasanlage besteht aus mehreren Teilabschnitten, die in der Regel aneinander geschweißt sind, um einen festen Zusammenhalt während des Fahrzeugbetriebes zu gewährleisten. Wegen des hieraus resultierenden starren Aufbaus ist eine Anpassung an den an der Bodengruppe des Fahrzeugs vorhandenen Einbauraum, etwa um Fertigungstoleranzen auszugleichen, nicht möglich. Problematisch bei derartigen Abgasanlagen ist weiterhin, dass deren Endabschnitt heckseitig aus der Fahrzeugkarosserie hervorsteht und dadurch z.B. bei leichten heckseitigen Auffahrunfällen erheblicher Schaden an der Abgasanlage entstehen kann.

Bei aus DE 199 29 423 A1 und DE 195 17 462 A1 bekannten Abgasanlagen sind Teilabschnitte der Abgasanlage gegeneinander teleskopartig verschiebbar, z.B. ist der heckseitig vorstehende Endabschnitt durch ein Endrohr gebildet, das teleskopartig verschiebbar an einem Abgasrohr gelagert ist. Dichtelemente zur Verwendung in derartigen Abgasanlagen sind aus der DE 35 42 684 A1 bekannt. Durch die teleskopartige Verschiebbarkeit ist in gewissen Grenzen eine Anpassung der Abgasanlage an den gegebenen Einbauraum möglich. Auch verringert die axiale Verschiebbarkeit vor allem im hinteren Fahrzeugbereich das Risiko größerer Schäden an der Abgasanlage bei leichten Auffahrunfällen.

Viele Fahrzeuge weisen im heckseitigen Bereich der Karosserie eine sich nach unten öffnende bogenförmige Ausnehmung auf, die vom Endrohr der Abgasanlage durchsetzt ist. Aus optischen Gründen und zur Verhinderung von Klappergeräuschen soll das Endrohr möglichst mittig in der Ausnehmung angeordnet sein. Aufgrund von Fertigungstoleranzen und wegen ihrer schwingungsgedämpften Aufhängung lässt sich eine herkömmliche Abgasanlage, insbesondere das heckseitige Abgasrohr oft nicht in der gewünschten Weise ausrichten.

Aufgabe der Erfindung ist es, eine Abgasanlage mit einer Verbindung zwischen einem ersten und einem zweiten Abgasrohr vorzuschlagen, die zusätzlich zur axialen Verschiebbarkeit ein Verschwenken der beiden Abgasrohre gegeneinander zulässt, wobei weiterhin die Dichtheit der Verbindung gewährleistet ist.

Diese Aufgabe wird mit der Erfindung gemäß Anspruch 1 dadurch gelöst, dass der von der Wulst umfasste Oberflächenbereich des Dichtelements eine der Wulstinnenfläche entsprechende Krümmung aufweist und dass die Wulstinnenfläche und der Oberflächenbereich des Dichtelements Teile konzentrischer Kugelflächen sind, deren gemeinsamer Mittelpunkt auf der Mittellängsachse des Abgasrohres liegt.

Das zweite Abgasrohr ist hierdurch quasi nach Art eines Kugelgelenkes am ersten Abgasrohr angelenkt. Die mit dem Dichtelement zusammenwirkende Wulst gewährleistet eine geringe, für den vorgesehen Zweck aber ausreichende relative Schwenkbarkeit der beiden Abgasrohre. Das zweite Abgasrohr kann so am ersten Rohr nicht nur in axialer Richtung verschoben werden, sondern auch innerhalb gewisser Grenzen verschwenkt werden. Durch die zusammenwirkenden konzentrischen Kugelflächen ist, von der Verschwenkung und Verschiebung unabhängig, eine ausreichende flächige Auflage des Dichtelements an beiden Rohren gewährleistet, so dass stets die volle Dichtwirkung erzielt ist.

Eine Ausrichtung bzw. Winkelverstellung dieser Art ist nicht nur im Falle eines Endrohres, sondern auch bei einer näher am Motor angeordneten Verbindungsstelle zwischen zwei Teilabschnitten der Abgasanlage bei deren Montage an der Fahrzeugbodengruppe zweckmäßig. Ganz allgemein ist durch die relative Axial- und Winkelverstellbarkeit zumindest zweier Teilabschnitte eine exakte Positionierung und Ausrichtung der Abgasanlage am Fahrzeug erleichtert.

So ist die Abgasanlage an den vorhandenen Einbauraum am Wagenboden besser anpassbar und insbesondere innerhalb der bogenförmigen Karosserieausnehmung im Heckbereich mittig justierbar. Dies führt insgesamt zu einem besseren Toleranzausgleich bei der Montage am Fahrzeug. Klappergeräusche durch Kontakt zwischen Abgasanlage und Fahrzeug werden so weit wie möglich vermieden.

Bei noch nicht vollständig festgezogener Rohrschelle kann die Justierung bei der Montage der Abgasanlage leicht durchgeführt werden. Nach Festziehen der Rohrschelle sind die Überlappungsbereiche der beiden Abgasrohre unter Kompression des Dichtelements zusammengehalten. Die von der Rohrschelle auf die Verbindungsstelle ausgeübte Kraft lässt sich problemlos so einstellen, dass die beiden Abgasrohre im Betrieb fest aneinander fixiert sind, wobei aber eine relative Axialverschiebung im Falle eines Heckaufpralls möglich ist. Eine Beschädigung der Abgasanlage wird am wirkungsvollsten vermieden, wenn die in Rede stehende Verbindung möglichst weit hinten, also im Heckbereich angeordnet ist. Dies ist der Fall, wenn das zweite Abgasrohr als ein die Karosserie heckseitig überragendes Endrohr ausgebildet ist. Die vorgeschlagene Ausgestaltung hat dabei noch den Vorteil, dass das Endrohr auf einfache Weise austauschbar ist.

Da sich die Überlappungsbereiche der beiden Abgasrohre gegenseitig nicht berühren, sondern unter Zwischenlage des elastischen Dichtelements miteinander verbunden sind, können Klappergeräusche auch an der Abgasanlage selbst nicht auftreten.

Vorzugsweise wird ein zweites Abgasrohr gewählt, dessen Überlappungsbereich einen größeren Innendurchmesser aufweist als der Außendurchmesser des Überlappungsbereiches des ersten Abgasrohres, wobei das zweite Abgasrohr in Strömungsrichtung des Abgases gesehen nach dem ersten Abgasrohr angeordnet ist. Gegenüber der umgekehrten Anordnung der beiden Rohre ist diese Anordnung vorteilhaft, weil sie dem Abgasstrom einen geringeren Widerstand entgegensetzt. Außerdem wird das Dichtelement nicht direkt mit Abgas beaufschlagt, was auf Dauer zu Undichtigkeiten führen könnte.

Beim Festziehen der Rohrschelle wird zunächst Kraft auf die Wulst des zweiten Abgasrohres ausgeübt. Erst durch die Verformung der Wulst wird Kraft auf das Dichtelement ausgeübt und dieses dichtend zwischen erstem und zweitem Abgasrohr eingeklemmt. Um den Kraftaufwand für eine radiale Verengung der Wulst zu erleichtern, sind in dieser in einer besonderen Ausführungsform über ihren Umfang verteilte Längsschlitze vorhanden.

Die Rohrschelle weist eine sich über ihren Umfang erstreckende, die Wulst des zweiten Abgasrohres aufnehmende Sicke auf, wobei die Innenfläche der Sicke eine der Außenfläche des Wulstes entsprechende Krümmung aufweist. Diese Ausgestaltung gewährleistet eine sichere Axialfixierung der Rohrschelle am zweiten Abgasrohr. Außerdem lässt sich das zweite Abgasrohr bei bereits montierter jedoch noch nicht endgültig festgezogener Rohrschelle behinderungsfrei verschwenken.

Um zu verhindern, dass bei einer Winkelverstellung des zweiten Abgasrohres dieses mit dem Freiende des ersten Abgasrohres in Berührung kommt und in dieser Lage fixiert wird, ist bei einer weiteren bevorzugten Ausführungsvariante eine aus dem der Wulst zugewandten Umfangsflächenbereich des Dichtelements vorstehende und mit der Stirnkante des zweiten Abgasrohres zusammenwirkende Anschlagschulter vorgesehen, wobei zwischen dieser und der Stirnkante ein eine Verschwenkung des zweiten Abgasrohres erlaubender Abstand vorhanden ist.

Die Erfindung wird nun anhand von in den beigefügten Zeichnungen dargestellten Ausführungsbeispielen näher erläutert. Es zeigen:
- Fig.1: ein erstes Ausführungsbeispiel des Überlappungsbereichs einer Abgasanlage in schematischer Längsschnittdarstellung,
- Fig.2: die in Fig.1 dargestellte Abgasanlage in Seitenansicht,
- Fig.3: eine perspektivische Ansicht des Dichtelementes aus Fig. 1,
- Fig.3a: den Ausschnitt III-a von Fig.3 mit einer anders gestalteten Trennfuge,
- Fig.4: ein weiteres Ausführungsbeispiel in einer Fig. 1 entsprechenden Darstellung,
- Fig.5: eine perspektivische Darstellung des Dichtelements gem. Fig.4,
- Fig.6: ein weiteres Ausführungsbeispiel in einer Fig.1 entsprechenden Darstellung,
- Fig.7: eine Draufsicht auf den Überlappungsbereich der Ausführungsbeispiele nach Fig.1 und 4 bei entfernter Rohrschelle.

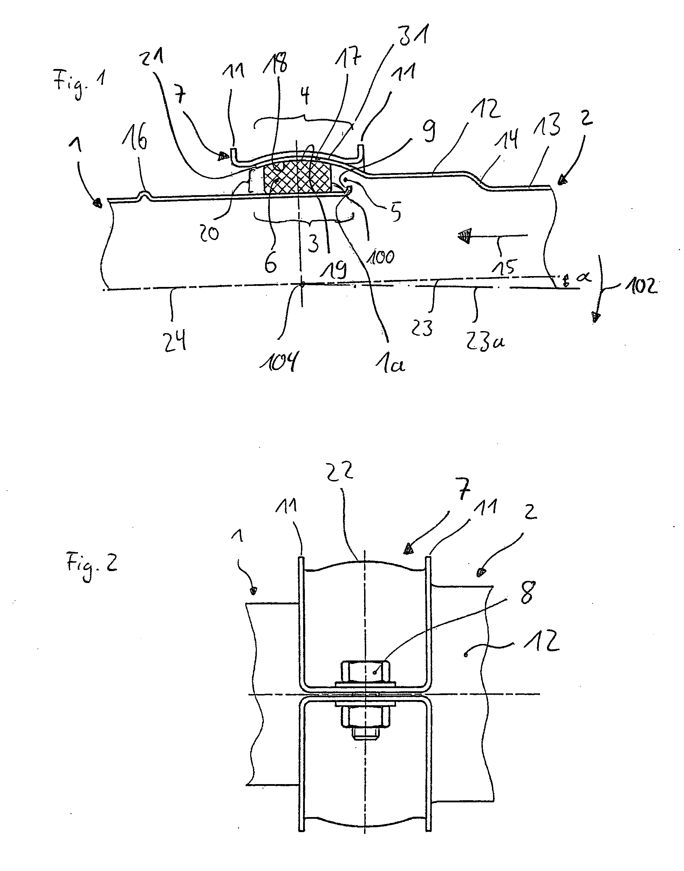

Fig.1 zeigt den Verbindungsbereich zweier Teilabschnitte einer Abgasanlage. Der eine Teilabschnitt weist ein erstes Abgasrohr 1 und der andere Teilabschnitt ein zweites Abgasrohr auf. Dieser Teilabschnitt und das zweite Abgasrohr sind beispielweise von einem heckseitig aus der Fahrzeugkarosserie vorstehenden Endrohr 2 gebildet, auf das im folgenden Bezug genommen wird. Das erste Abgasrohr 1 (im folgenden kurz Abgasrohr genannt)ist mit dem Endrohr 2 teleskopartig verschiebbar verbunden. Die einander zugewandten Endabschnitte von Abgasrohr 1 und Endrohr 2 ragen mit Überlappungsbereichen 3,4 ineinander hinein, wobei der Überlappungsbereich 4 des Endrohres 2 einen größeren Durchmesser aufweist und den Überlappungsbereich des Abgasrohres 1 umfasst. Zwischen den Überlappungsbereichen 3,4 ist ein Spaltraum 5 vorhanden, in dem ein ringförmiges Dichtelement 6 aus einem in Radialrichtung elastisch verformbaren Material, z.B. aus einem engmaschigen Drahtgestrick, angeordnet ist.

Die Überlappungsbereiche 3,4 sind von einer Rohrschelle 7 umfasst. Die Rohrschelle 7 ist mit Hilfe einer Schraube 8 verspannt, wobei sie die Überlappungsbereiche 3,4 unter elastischer Kompression des Dichtelements 6 zusammenhält. Die Ränder 11 der Rohrschelle 7 sind zur Stabilitätserhöhung radial nach außen umgebogen. Das Dichtelement 6 gewährleistet eine elastische Verbindung zwischen dem Abgasrohr 1 und dem Endrohr 2. Die Überlappungsbereiche 3,4 berühren sich dabei gegenseitig nicht, sodass keine Klappergeräusche entstehen können. Das Dichtelement 6 verhindert außerdem, dass Abgas über den Spaltraum 5 vom Inneren des Abgasrohres 1 und des Endrohres 2 nach außen gelangen kann.

Die einander zugewandten Enden des Abgasrohres 1 und des Endrohres 2 sind radial umgebogen und ragen in den Spaltraum 5 hinein. Das Freiende 1a des Abgasrohres 1 ist radial nach außen gebogen und bildet einen die ausgefahrene Endlage des Endrohres 2 definierenden und mit dem Dichtelement 6 zusammenwirkenden Anschlag. Das Abgasrohr 1 bildet einen mit einer in Axialrichtung weisenden Stirnseite 100 des Dichtelements 6 zusammenwirkenden Anschlag 9. Da das Dichtelement wegen seines gekrümmten Oberflächenbereichs 19 am Endrohr 2 in Axialrichtung fixiert ist, ist auf diese Weise die Endlage des Endrohres im ausgefahrenen Zustand definiert. Zumindest bei angezogener Rohrschelle 7 kann das Endrohr nicht vom Abgasrohr 1 herunter gezogen werden. Das Endrohr 2 kann auf seiner gesamten Länge einen gegenüber dem Abgasrohr vergrößerten Innenquerschnitt aufweisen. Es ist aber auch denkbar, dass, wie in Fig.1 und 2 gezeigt, nur ein sich an dem Überlappungsbereich 4 anschließender Rohrabschnitt 12 einen dem Überlappungsbereich entsprechenden Durchmesser aufweist, während der restliche Bereich 13 des Endrohres 1 auf ein dem Abgasrohr entsprechendes Maß verengt ist. Zwischen dem Abschnitt 12 und dem Bereich 13 ist eine Radialschulter 14 angeordnet. Um den Verschiebeweg des Endrohres 2 bei einer Verschiebung in Richtung des Pfeiles 15, etwa bei der Montage zu begrenzen, ist am Außenumfang des Abgasrohres 1 ein beispielsweise in Form eines Ringvorsprunges 16 ausgebildeter und mit der in Pfeilrichtung 15 weisenden Stirnseite des Dichtelements 6 oder mit dem Anschlag 9 zusammenwirkender Gegenanschlag vorhanden.

Der Überlappungsbereich 4 des Endrohres 2 weist eine sich radial nach außen vorwölbende Wulst 17 auf. In der Wulst 17 liegt das Dichtelement 6 mit dem radial außen liegenden Teil seiner Querschnittsfläche ein. Die Innenfläche 18 der Wulst 17 und der mit ihr zusammenwirkende Oberflächenbereich 19 des Dichtelements 6 weisen zueinander komplementäre Krümmungen auf, sodass die Wulst 17 das Dichtelement 6 formschlüssig aufnimmt. Zwischen der Stirnkante 21 der Wulst 17 und der Umfangsfläche des Abgasrohres 1 ist ein Radialabstand 20 vorhanden, der so bemessen ist, dass auch bei radial komprimiertem Dichtelement 6 die Stirnkante 21 nicht am Abgasrohr 1 anliegen kann, was zu Klappergeräuschen führen könnte.

Die die Überlappungsbereiche 3,4 zusammenhaltende Rohrschelle 7 weist eine sich radial nach außen vorwölbende und in Axialrichtung mittig angeordnete umlaufende Sicke 22 auf, die eine zur Krümmung der Außenfläche 31 der Wulst 17 komplementäre Krümmung aufweist. Die Sicke 22 umfasst somit die Wulst 17 mit einem in Axialrichtung wirksamen Formschluss. Durch die gekrümmte Ausbildung der miteinander zusammenwirkenden Flächen von Dichtelement 6, Wulst 17 und vorzugsweise auch Sicke 22 ist das Endrohr 2 in beliebigen Richtungen aus seiner Mittellage, bei der seine Mittellängsachse 23 mit der Mittellängsachse 24 des Abgasrohres 1 fluchtet, um einen geringen Winkel α schwenkbar.

Wird das in Fig. 1 dargestellte Endrohr 2 um einen Winkel α in Richtung des Pfeils 102 aus seiner Mittellage geschwenkt, so nimmt seine Mittellängsachse die Position 23a ein. Der Oberflächenbereich 19 des Dichtelements 6 ist als Kugelflächenstück ausgeformt, wobei der Mittelpunkt 104 der Kugel auf der Mittellängsachse 24 des Abgasrohres 1 liegt. Die Innenfläche 18 der Wulst 17 ist ebenfalls als Kugelflächenstück ausgebildet, wobei der Mittelpunkt dieser Kugel auf der Mittellängsachse 23 des Endrohres 2 liegt und außerdem mit dem Mittelpunkt 104 zusammenfällt. Die Kugelflächen sind also konzentrisch.

Wird beim Verschwenken des Endrohres 2 gegenüber des Abgasrohres 1 aus der Mittelachse in Pfeilrichtung 102 die Innenfläche 18 auf dem Oberflächenbereich 19 gleitend verschoben, so ändert sich der gemeinsame Mittelpunkt 104 nicht, obwohl die Achse 23 in die Position 23a übergeht und mit der Achse 24 einen Winkel α≠0 einschließt. Dies hat zur Folge, dass der Oberflächenbereich 19 unabhängig vom Winkel α mit seiner gesamten Oberfläche am Innenrand 18 anliegt. Würden die Kugelflächen nicht konzentrisch liegen, würde bei einer solchen Verschwenkung das Dichtelement 6 je nach Schwenkrichtung an unterschiedlichen Stellen unterschiedlich deformiert werden. Die genannten geringfügigen Deformationen des Dichtelements beim Verschwenken können dann vollständig ausgeschlossen werden, wenn die miteinander zusammenwirkenden gekrümmten Flächen von Dichtelement 6 und Wulst 17 Teile von konzentrischen Kugelflächen sind, deren gemeinsamer Mittelpunkt auf dem Schnittpunkt der Mittellängsachsen 24 und 23 des Abgasrohres 1 und des Endrohres 2 liegt.

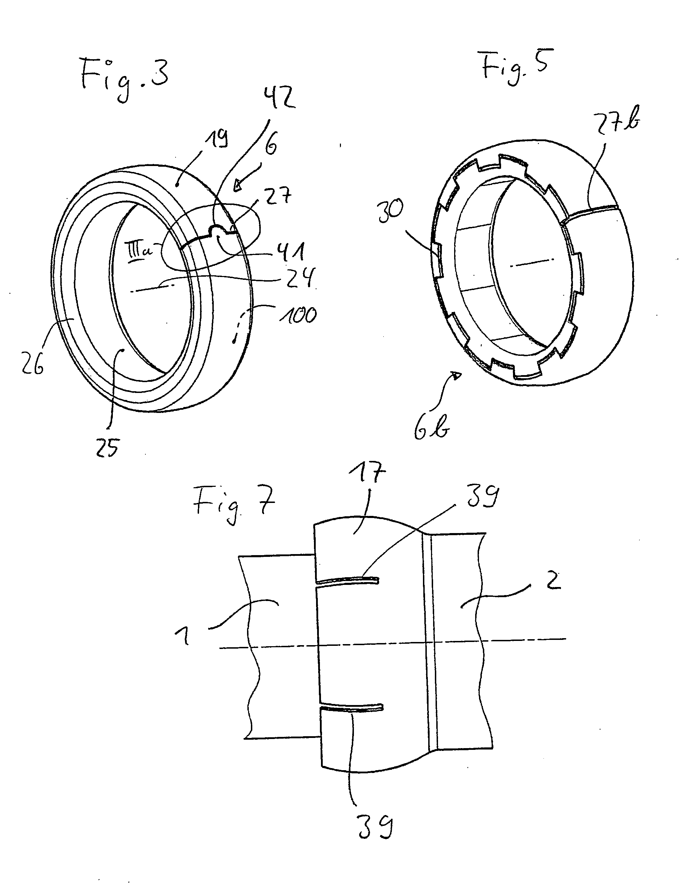

Beim Dichtelement 6 in Fig. 3 verläuft die mit der Umfangsfläche des Abgasrohres 1 zusammenwirkende Innenfläche 25 parallel bzw. koaxial zur Mittellängsachse 24. Die restliche Oberfläche des Dichtelements 6 setzt sich aus zwei im wesentlichen parallel zueinander verlaufenden Seitenflächen 26 und 100 und dem gekrümmten Oberflächenbereich 19 zusammen. Das Dichtelement 6 ist an einer Stelle durchtrennt, weist somit eine Trennfuge 27 auf. Diese Ausgestaltung erleichtert das Einbringen des Dichtelements 6 in die Wulst 17, indem die sich beidseitig an die Trennfuge 27 anschließenden Bereiche unter radialer Verengung des Dichtelements 6 seitlich aneinander vorbei geführt werden. Die an der Trennfuge 27 aneinander stoßenden Stirnflächen des Dichtelements 6 sind nicht planeben, sondern greifen formschlüssig ineinander. Dazu ist an der einen Stirnseite ein sich etwa radial erstreckender mittiger Vorsprung 41 und an der anderen Stirnseite eine komplementär geformte Ausnehmung 42 vorhanden. In Fig. 3a ist ein anders gestalteter Trennfugenbereich gezeigt. Die an der Trennfuge 27a zusammenstoßenden Stirnflächen weisen jeweils einen seitlich angeordneten Vorsprung 43 auf, der in eine komplementär geformte Ausnehmung 44 der jeweils anderen Stirnseite eingreift.

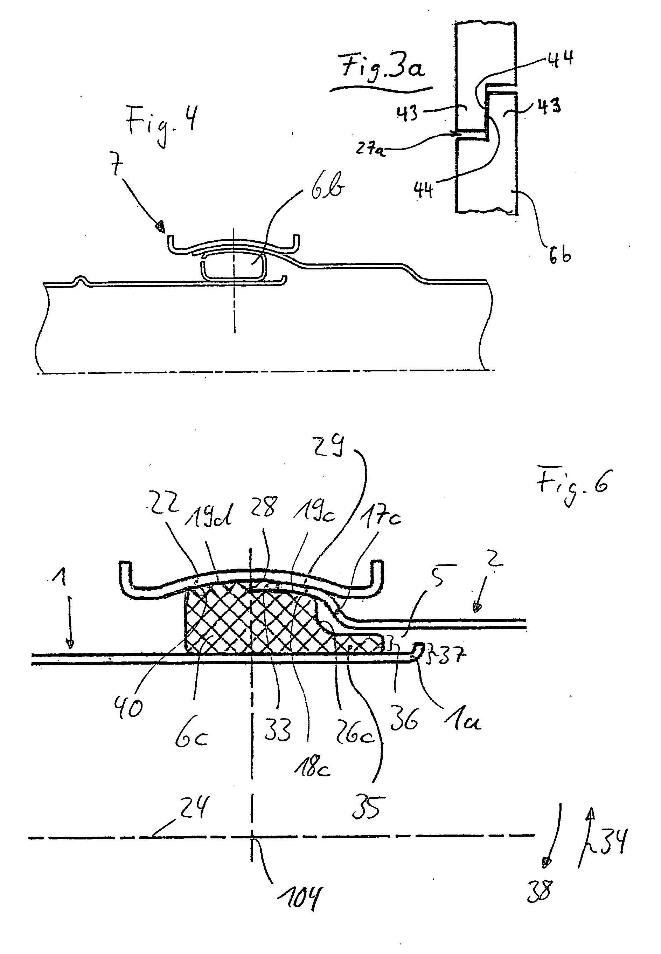

Das in Fig.4 gezeigte Ausführungsbeispiel unterscheidet sich von jenen nach Fig.1 bis Fig.3 nur durch ein anders gestaltetes, in Fig.5 vergrößert dargestelltes Dichtelement 6b. Dieses besteht aus einem innen hohlen Ring beispielsweise aus Federstahl. Um eine radiale Kompression zu ermöglichen, ist an einer Seitenfläche ein sich mäanderförmig über den gesamten Umfang erstreckender Dehnungsspalt 30 vorhanden. Dieser Dehnungsspalt 30 verengt sich, wenn die Rohrschelle 7 festgezogen und dementsprechend das Dichtelement 6b in Radialrichtung beaufschlagt wird. Auch bei dem Dichtelement 6b ist eine Trennfuge 27b vorhanden, um das Einführen in die Wulst 17 zu erleichtern.

Bei dem in Fig.6 gezeigten Ausführungsbeispiel erstreckt sich der mit der Innenfläche 18c der Wulst 17c zusammenwirkende Oberflächenbereich 19c auf der dem Endrohr 2 zugewandten Seite bis zum Scheitel des Dichtelements 6c. Dort ist der Oberflächenbereich 19c durch eine im wesentlichen radial vorstehende ringförmige Anschlagschulter 28 begrenzt. An diese schließt sich ein Oberflächenbereich 19d an, der eine der Innenfläche 40 der Sicke 22 entsprechende Krümmung aufweist. Zwischen der Sicke 22 und dem Oberflächenbereich 19c ist ein Spalt 29 vorhanden, in dem die Wulst 17c angeordnet ist. Bei paralleler bzw. zur Mittellängsachse 24 koaxialer Ausrichtung des Endrohres 2 ist zwischen der Wulst 17c und der Anschlagschulter 28 ein Axialspalt 33 vorhanden. Eine Verschwenkung des Endrohres 2 z.B. in Richtung des Pfeiles 34 ist nur soweit möglich, bis die Wulst 17c an der Anschlagfläche 28 anliegt. Für eine Verschwenkung in die Gegenrichtung 38 gilt das Analoge für den diametral gegenüberliegenden Bereich (nicht dargestellt) der Anschlagschulter 28. Da es sich bei dem Oberflächenbereich 19c und der Innenfläche 18c der Wulst 17c wie in den Fig.1-5 um Teile von Kugelflächen mit konzentrischem Mittelpunkt 104 handelt, kommt es z.B. bei einer Verschwenkung des Endrohres 2 in der Papierebene (Pfeile 34, 38) zu keiner Verformung bzw. zu keinem Verquetschen des Dichtelements 6c.

Aus der dem Endrohr 2 zugewandten Seitenfläche 26c des Dichtelements 6c ragt eine sich in Axialrichtung bzw. koaxial zur Mittellängsachse 24 erstreckende Schürze 35 hervor. Die Dicke 36 der Schürze 35 ist größer als der in den Spaltraum 5 hineinragende Überstand 37 des radial umgebogenen Freiendes 1a des Abgasrohres 1. Durch diese Ausgestaltung ist verhindert, dass bei einer Verschwenkung des Endrohres 2 in Richtung des Pfeiles 38 dieses mit dem Abgasrohr 1 in Berührung kommen kann.

Um eine radiale Kompression des Dichtelements 6, 6b, 6c zu erleichtern bzw. zu ermöglichen, ist die Wulst 17 von mehreren über deren Umfang verteilten Längsschlitzen 39 durchbrochen (Fig. 7). Diese Ausgestaltung ist bei allen beschriebenen Ausführungsbeispielen zweckmäßig.

### Bezugszeichenliste

- 1: Abgasrohr
- 1a: Freiende
- 2: Endrohr
- 3,4: Überlappungsbereich
- 5: Spaltraum
- 6,6b,6c: Dichtelement
- 7: Rohrschelle
- 8: Schraube
- 9: Anschlag
- 11: Rand
- 12: Rohrabschnitt
- 13: Bereich
- 14: Radialschulter
- 15: Pfeil
- 16: Ringvorsprung
- 17: Wulst
- 18: Innenfläche
- 19: Oberflächenbereich
- 20: Radialabstand
- 21: Stirnkante
- 22: Sicke
- 23: Mittellängsachse
- 23a: Position
- 24: Mittellängsachse
- 25: Innenfläche
- 26: Seitenfläche
- 27,27b: Trennfuge
- 28: Anschlagschulter
- 29: Spalt
- 30: Dehnungsspalt
- 31: Außenfläche
- 32: Ende
- 33: Axialspalt
- 34: Pfeil
- 35: Schürze
- 36: Dicke
- 37: überstand
- 38: Gegenrichtung
- 39: Längsschlitz
- 40: Innenfläche
- 41: Vorsprung
- 42: Ausnehmung
- 43: Vorsprung
- 44: Ausnehmung
- 100: Seitenfläche
- 102: Richtung
- 104: Mittelpunkt

## Patentansprüche

1. Abgasanlage für Kraftfahrzeuge, mit einem ersten und einem zweiten Abgasrohr (1, 2), welche sich teleskopartig überlappen, wobei
- zwischen den sich überlappenden und einen Spaltraum (5) zwischen sich einschließenden Bereichen (3,4) des ersten Abgasrohres (1) und des zweiten Abgasrohres (2) ein ringförmiges, in Radialrichtung elastisch verformbares Dichtelement (6) angeordnet ist
- die Überlappungsbereiche (3,4) durch eine Rohrschelle (7) unter Kompression des Dichtelements (6) zusammengehalten sind, und
- der Überlappungsbereich (4) des zweiten Abgasrohres (2) eine ringförmig geschlossene, sich radial nach außen vorwölbende Wulst (17) aufweist, in der das Dichtelement (6) mit dem radial außen liegenden Teil seiner Querschnittsfläche einliegt,
**dadurch gekennzeichnet,**
**dass** der von der Wulst (17) umfasste Oberflächenbereich (19, 19a) des Dichtelements (6a,6b) eine der Wulstinnenfläche (18) entsprechende Krümmung aufweist und dass die Wulstinnenfläche (18) und der Oberflächenbereich (19, 19a) des Dichtelements (6a,6b) Teile konzentrischer Kugelflächen sind, deren gemeinsamer Mittelpunkt auf der Mittellängsachse (24) des Abgasrohres (1) liegt.

2. Abgasanlage nach Anspruch 1
**dadurch gekennzeichnet,**
**dass** der Überlappungsbereich (3) des ersten Abgasrohres (1) von dem Überlappungsbereich (4) des zweiten Abgasrohres (2) umfasst und das zweite Abgasrohr (2) in Strömungsrichtung des Abgases gesehen nach dem ersten Abgasrohr (1) angeordnet ist.

3. Abgasanlage nach Anspruch 1 oder 2,
**dadurch gekennzeichnet,**
**dass** die Wulst (17) von mehreren über deren Umfang verteilten Längsschlitzen (39) durchbrochen ist.

4. Abgasanlage nach einem der Ansprüche 1 bis 3,
**dadurch gekennzeichnet,**
**dass** die Rohrschelle (7a) eine sich über deren Umfang erstreckende, die Wulst (17) des zweiten Abgasrohres (2) aufnehmende Sicke (22) aufweist.

5. Abgasanlage nach einem der Ansprüche 1 bis 4,
**dadurch gekennzeichnet,**
**dass** die Innenfläche (40) der Sicke (22) eine zur Krümmung der Wulst (17, 17a) komplementäre Krümmung aufweist.

6. Abgasanlage nach einem der Ansprüche 1 bis 5,
**gekennzeichnet durch**,
eine aus dem der Wulst (17) zugewandten Oberflächenbereich (19, 19a) des Dichtelements (6b) vorstehende und mit der Stirnkante (21a) des zweiten Abgasrohres (2) zusammenwirkende Anschlagschulter (28), wobei zwischen der Anschlagschulter (28) und der Stirnkante (21a) ein eine Verschwenkung des zweiten Abgasrohres (2) erlaubender Abstand vorhanden ist.

7. Abgasanlage nach einem der Ansprüche 1 bis 6,
**dadurch gekennzeichnet,**
**dass** das zweite Abgasrohr (2) ein heckseitig aus einer Fahrzeugkarosserie vorstehendes Endrohr ist.
